# EUROPÄISCHE PATENTSCHRIFT

(11) **EP 2 363 630 B1**
(45) Veröffentlichungstag und Bekanntmachung des Hinweises auf die Patenterteilung: **14.02.2018**
(21) Anmeldenummer: 11450027.5
(22) Anmeldetag: 23.02.2011
(51) Int. Cl.: F17D 5/02, G01M 3/28, F16K 17/00, F16K 37/00, F16K 7/17

(54) **Verfahren zur Überwachung pneumatisch betätigbarer Membranventile in Flüssigfütterungsanlagen**
Method for monitoring pneumatically actuatable membrane valves in liquid feed assemblies
Procédé de surveillance de soupapes à membrane pouvant être actionnées de manière pneumatique dans des installations d'alimentation liquide

(30) Priorität: 05.03.2010 AT 3522010
(43) Veröffentlichungstag der Anmeldung: 07.09.2011
(73) Patentinhaber: Schauer Agrotronic GmbH, 4731 Prambachkirchen (AT)
(72) Erfinder: Schönbauer, Hubert, Dipl.-Ing (FH), 4722 Peuerbach (AT)
(74) Vertreter: Ofner, Clemens

(56) Entgegenhaltungen:
- EP-A2- 1 726 855

## Beschreibung

In Flüssigfütterungsanlagen werden für die Steuerung der Futterzufuhr zu der oder den Verteilerleitungen und zur Abgabe des Futters an Futterstellen bevorzugt pneumatisch betätigte Membranventile verwendet, bei welchen die Membrane in einer Stellung den Durchlass freigibt und bei ihrer Druckluftbeaufschlagung in der Sperrstellung im Zusammenwirken mit einer Auflage z. B. einem so genannten Ventilsteg im Durchlass diesen sperrt. Die Membran ist in einem Ventilgehäuse gehalten und kann nach Abnahme eines Gehäusedeckels gewartet oder ausgewechselt werden. Die Druckluftbeaufschlagung aus einer Druckluftleitung wird über elektrisch betätigte Ventile oder Schieber gesteuert. Im Normalfall erfolgt die Schaltung der Druckluftventile von einer zentralen Steuereinheit aus, die über die Ausgabeventile auch die Ausgabemenge des Futters bestimmt. Besonders bei den für jeden Futterungsvorgang zu betätigenden Ausgabeventilen kommt es zu einem erhöhten Verschleiß, sodass die Membranen lecken können. Die Folge davon ist ein erhöhter Luftverbrauch, da die Luft über den Fehler in das Futterleitungssystem oder den Futterablauf entweichen kann. Besonders die in das Futterleitungssystem eindringende Luft ist für den Betriebsablauf unerwünscht bzw. schädlich. Bisher ist es meist notwendig, die fehlerhafte oder fehlerhaften Membranen durch unmittelbare Begutachtung, unter Öffnen des Gehäusedeckels zu suchen, was bei den vielen meist an einer gemeinsamen Futterleitung liegenden Ausgabeventilen der Futterstellen oft zu der Notwendigkeit führt, die meisten Ventile zu überprüfen, um die fehlerhafte Membran zu finden.

Es wurde bereits vorgeschlagen, Fehlerventile durch Geräuschwächter aufzusuchen, doch kann damit noch keine ausreichende Identifizierung erfolgen, sondern nur allgemein ein Ventilfehler in der Leitung festgestellt werden.

Zur Abhilfe ist es in der EP 1 726 855 A2 vorgeschlagen worden, jedes einzelne Membranventil mit einem mechanischen, elektrischen oder elektronischen Lagefühler auszustatten, der mit der Steuereinheit der Fütterungsanlage verbunden ist und bei der Druckluftbeaufschlagung der Membran eine Fehlstellung anzeigt, sodass diese Membran über die Steuereinheit als fehlerhaft erkannt wird. Auch hier sollte die fehlerhafte Membran umgehend ausgewechselt werden. Die Ausführung zeigt trotzdem Überwachungsfehler und der Gesamtaufwand ist wegen der Zusatzausstattung jedes einzelnen Ventiles so hoch, dass sich diese Lösung bisher in der Praxis kaum durchsetzen konnte. Eine ähnliche Überwachungseinrichtung mit den gleichen Nachteilen ist Gegenstand der GB 1 414 955 A.

Nach der DE 3 316 434 A1 wird vorgeschlagen, bei Flüssigfütterungsanlagen den Betriebsdruck des Futters selbst in der Futterleitung zu überwachen und dann, wenn dieser Druck einen Sollwert nicht oder verspätet erreicht, einen Fehler des eben betätigten Ausgabeventils anzuzeigen, wobei die Anlage bis zur Behebung des Membranfehler abgeschaltet wird. Diese Lösung ist unbefriedigend und ungenau, wobei sich unzulässige Verzögerungen in der Futterausteilung für alle noch zu aktivierenden Auslässe ergeben und wegen des von der wechselnden Konsistenz beeinflussten Leitungswiderstands auch Fehlmessungen auftreten können.

Bei einem Verfahren zur Überwachung pneumatisch durch Steuerung der Druckluftzufuhr aus einer Druckluftleitung betätigbarer Membranventile in den Futterleitungen von Flüssigfütterungsanlagen, insbesondere für unter Druckluftbeaufschlagung schließende Ausgabeventile an Futterstellen besteht die zu lösende Aufgabe somit darin, Verfahrensschritte anzugeben, die eine direkte und rasche Identifizierung fehlerhafter Membranen mit geringem zusätzlichen Anlageaufwand und einfachen Mitteln ermöglichen sollen.

Diese Aufgabe wird dadurch gelöst, dass beim Fütterungsbetrieb der Anlage der Druckluftverbrauch in der Druckluftleitung, zum Beispiel mittels eines Durchflusszählers überwacht wird, sodass eine für den jeweiligen Betriebszustand der Fütterungsanlage untypische Erhöhung dieses Verbrauches als Ventilfehler gewertet werden kann und dann, wenn die an der gleichen Futterleitung liegenden Membranventile nacheinander im Absperrsinn betätigt werden, ein Ausgabeventil, bei dessen Betätigung der Luftverbrauch eine für den Normalbetrieb untypische Änderung, insbesondere Verringerung des Luftverbrauches zeigt, dieses Ventil als fehlerhaft identifiziert wird. Die Identifizierung erfolgt vorzugsweise unmittelbar über die vorgesehen, gemeinsame Steuereinheit, welche ja die Betätigung der fehlerhaften Membran angesteuert hat.

Neben dem oben beschriebenen Identifizierungsvorgang, bei dem vorzugsweise zunächst alle Ventile geöffnet werden müssen, besteht auch in Weiterbildung der Erfindung die Möglichkeit, dass die Überwachung dauernd oder periodisch während des normalen Fütterungsbetriebes durchgeführt, bei untypischen Erhöhungen des Luftverbrauches eine Fehlermeldung erzeugt und das fehlerhafte Membranventil angezeigt oder wenigstens der Futterleitungsteil, in dem diese Erhöhung und damit der Fehler auftritt, ermittelt wird, so dass dann eine genaue Nachprüfung auf die Membranventile dieses Futterleitungsteiles beschränkt werden kann.

Aus dem Luftverbrauch bzw. der Druckänderung an der Fehlerstelle können sogar Aussagen über die tatsächliche Größe des Fehlers, normalerweise des Loches in der Membran gezogen werden, welche die Entscheidung, ob die Anlage bis zur Schadensbehebung am Ventil still gesetzt werden soll oder weiter betrieben werden kann, beeinflussen. Bei geringen Druckänderungen kann der Fütterungsvorgang fortgesetzt und das identifizierte Ventil auch gezielt bei dem oder den nachfolgenden Fütterungsvorgängen überwacht werden, sodass nur bei einer Wiederholung oder Verstärkung der Fehleranzeige ein Eingreifen notwendig wird.

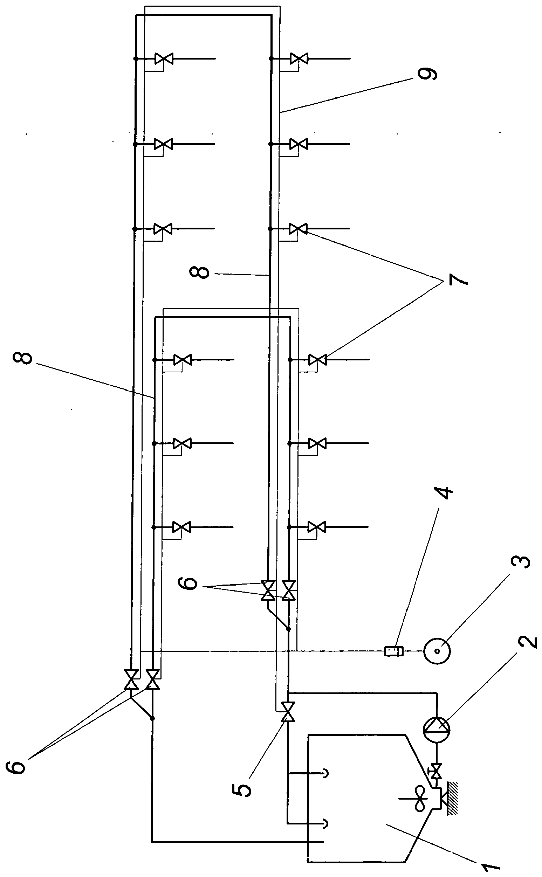

In der Zeichnung ist zur näheren Erläuterung der Erfindung das Schema einer Flüssigfütterungsanlage veranschaulicht, wobei der pneumatische Teil der Anlage in stärkeren Linien als die übrigen Elemente veranschaulicht wurde.

Für die Fütterungsanlage ist ein Anmischbehälter 1 mit Rührwerk und Reinigungseinrichtungen vorhanden, der auf einer Wiegeeinrichtung abgestützt ist und aus dem das Flüssigfutter (beim Reinigungsbetrieb Waschflüssigkeit) über eine Futterpumpe 2 entnommen und in Futterleitungen, als über Ringleitungsventile 6 beaufschlagbare Ringleitungen 8 dargestellt wurden, abgegeben werden kann. Für den Reinigungsbetrieb ist noch ein mit den Futterleitungen 8 verbundenes Reinigungsventil 5 in einer Rückführleitung zum Anmischbehälter 1 vorhanden.

Für die Druckluftzufuhr dient ein Druckluftkompressor 3, der über einen Durchflusszähler 4 eine Druckluftleitung 9 beaufschlagt, die mit den schon erwähnten Ventilen 5, 6 und Futterstellen- oder Ausgabeventilen 7 an den Futterringleitungen verbunden ist. Steuerleitungen, welche die genannten als Membranventile ausgestattete Ventile 7 nach Befehlen von einer zentralen Steuereinheit über entsprechende Absperrungen mit Druckluft beaufschlagen bzw. deren Druckluftzufuhr sperren wurden nicht näher dargestellt.

Beim Betrieb werden zur Fehlersuche die Ausgabeventile 7 nach der einen Möglichkeit geöffnet und einzeln nacheinander geschlossen, wobei der Luftverbrauch bei jedem einzelnen Ausgabeventil 7 über den Durchflusszähler 4 überwacht wird. Sinkt der Luftverbrauch bei Betätigung eines Ventiles 7 im Schließsinn ab, so ist dieses Ventil als fehlerhaft identifiziert. Die Druckluftüberwachung kann nach der vorstehend erwähnten Möglichkeit auch während des gesamten Fütterungsbetriebes vorgenommen werden, um so fehlerhaft Ventile aufzufinden.

## Patentansprüche

1. Verfahren zur Überwachung pneumatisch durch Steuerung der Druckluftzufuhr aus einer Druckluftleitung (9) betätigbarer Membranventile (6, 7) in den Futterleitungen (8, 9) von Flüssigfütterungsanlagen, **dadurch gekennzeichnet, dass** beim Fütterungsbetrieb der Anlage der Druckluftverbrauch in der Druckluftleitung (9), zum Beispiel mittels eines Durchflusszählers (4) überwacht wird, sodass eine Erhöhung dieses Verbrauches als Ventilfehler gewertet werden kann und dann, wenn die an der gleichen Futterleitung (8 bzw. 9) liegenden Membranventile (7) nacheinander im Absperrsinn betätigt werden, ein Membranventil (7), bei dessen Betätigung der Luftverbrauch eine Verringerung zeigt, dieses Membranventil (7) als fehlerhaft identifiziert wird.

2. Verfahren nach Anspruch 1, **dadurch gekennzeichnet, dass** die Überwachung dauernd oder periodisch während des normalen Fütterungsbetriebes durchgeführt, bei Erhöhungen des Luftverbrauches eine Fehlermeldung erzeugt und das fehlerhafte Membranventil aus einer Druckerhöhung bei seiner Betätigung angezeigt oder wenigstens jener Futterleitungsteil, in dem diese Erhöhung und damit der Fehler auftritt, ermittelt wird, sodass dann eine genaue Nachprüfung auf die Membranventile dieses Futterleitungsteiles beschränkt werden kann.

## Claims

1. Method for monitoring membrane valves (6, 7) in the feed lines (8, 9) of liquid feeding systems that are pneumatically actuatable by controlling the supply of compressed air from a compressed air line (9), **characterized in that** during the feeding operation to the plant the compressed air consumption in the compressed air line (9) is monitored for example by means of a flow meter (4), so that an increase in this consumption can be evaluated as a valve failure, and when the membrane valves (7) on the same feed line (8 and 9 respectively) are actuated one after the other in the shutoff direction and actuation of a membrane valve (7) causes the display of reduced air consumption, that membrane valve (7) is identified as faulty.

2. Method according to claim 1, **characterized in that** monitoring performed continuously or periodically during the normal feeding operation generates an error message in response to increases in air consumption, and the defective membrane valve is displayed from an increase in pressure when the valve is actuated, or at least the section of feed line is determined in which this increase and thus the fault occurs, so that a detailed inspection can then be limited to the membrane valves in this section of feed line.

## Revendications

1. Procédé de surveillance de soupapes à membranes (6, 7) pouvant être actionnées de manière pneumatique par la commande de l'entrée d'air comprimé provenant d'une conduite d'air comprimé (9), dans les conduites d'alimentation (8, 9) pour des installations d'alimentation liquide, **caractérisé en ce que**, lors du fonctionnement de l'installation avec des aliments, la consommation en air comprimé dans la conduite d'air comprimé (9) est surveillée, par exemple au moyen d'un compteur de débit (4), de façon à ce qu'une augmentation de cette consommation puisse être analysée comme un défaut de soupape et, lorsque les soupapes à membranes (7) se trouvant sur la même conduite d'alimentation (8 ou 9) sont actionnées successivement dans le sens de l'arrêt, une soupape à membrane (7) montre, lors de son actionnement, une diminution de la consommation en air, alors cette soupape à membrane (7) est identifiée comme défectueuse.

2. Procédé selon la revendication 1, **caractérisé en ce que** la surveillance est effectuée en permanence ou de manière périodique pendant l'exploitation normale avec des aliments, lors d'une augmentation de la consommation en air, un message d'erreur est généré et la soupape à membrane défectueuse est affichée à partir d'une augmentation de pression lors de son actionnement ou au moins la partie de la conduite d'alimentation, dans laquelle cette augmentation, et donc le défaut survient, est déterminée, de façon à ce qu'une vérification précise puisse être limitée aux soupapes à membranes de cette partie de la conduite d'alimentation.
